# EUROPÄISCHE PATENTSCHRIFT

(11) **EP 0 438 621 B1**
(45) Veröffentlichungstag und Bekanntmachung des Hinweises auf die Patenterteilung: **19.06.1996**
(21) Anmeldenummer: 90101458.9
(22) Anmeldetag: 25.01.1990
(51) Int. Cl.: G03C 1/76, G03C 1/85, G03C 1/95

(54) **Beschichtungsmasse für die Rückseite fotografischer Trägermaterialien**
Backing layer composition for photographic support
Composition de revêtement pour la face arrière d'un support photographique

(43) Veröffentlichungstag der Anmeldung: 31.07.1991
(73) Patentinhaber: Felix Schoeller jr. Papierfabrik GmbH & Co. KG, D-49086 Osnabrück (DE)
(72) Erfinder: Säverin, Eckehard, Chem.-Ing., D-4500 Osnabrück (DE); Tyrakowski, Hans-Udo, D-4507 Hasbergen (DE)
(74) Vertreter: Minderop, Ralph H., Dr. rer. nat.

(56) Entgegenhaltungen:
- EP-A- 0 274 017
- EP-A- 0 312 638
- PATENT ABSTRACTS OF JAPAN vol. 12, no. 422 (P-783)(3269) 09 November 1988, & JP-A- 63 157149

## Beschreibung

Die Erfindung betrifft eine Rückseitenschicht für fotografische Trägermaterialien und eine Beschichtungsmasse zur Herstellung einer solchen Schicht auf der Rückseite von Trägermaterialien für lichtempfindliche Schichten. Diese Trägermaterialien können in Form eines kunststoffbeschichteten Papiers oder in Form einer Kunststoffolie vorliegen. Die Rückseite ist jeweils die Oberfläche des Trägermaterials, die der später das Bild tragenden Vorderseite gegenüberliegt.

Als Träger für lichtempfindliche Schichten, insbesondere für die Farbfotografie, werden üblicherweise Kunststoffolien verwendet oder Papiere, die auf ihren Oberflächen, d.h. Vorderseite und Rückseite, mit Polyolefinschichten überzogen sind. Diese Beschichtung erfolgt vorzugsweise nach dem Verfahren der Extrusionsbeschichtung und unter Verwendung von Polyethylen. Ein solcher fotografischer Träger ist beispielsweise beschrieben in US-PS 3 411 908.

Durch eine beidseitige Polyolefinbeschichtung ist das Basispapier gegen ein Eindringen von Entwicklungs-, Fixier- und Wässerungsbädern geschützt, und die Bildentwicklung kann vollautomatisch in kürzester Zeit erfolgen.

Die Polyolefine können Polyethylene sein wie LDPE, LLDPE, HDPE, oder Polypropylen oder Gemische dieser Komponenten. Sie haben als Schichtbildner viele Vorteile, aber auch Eigenschaften, die im Rahmen der Herstellung oder der weiteren Behandlung solcher Papiere nachteilig sind. Abgesehen von den Haftungsproblemen zwischen der Polyolefinoberfläche und den lichtempfindlichen Emulsionen, die durch zusätzliche Maßnahmen und Mittel behebbar sind, müssen Polyolefinschichten im Laufe der Herstellung und der Verarbeitung derartiger fotografischer Papiere bestimmte Eigenschaften erfüllen, bzw. es müssen teilweise Eigenschaften, die die Polyolefine von Haus aus besitzen, unterdrückt oder überbrückt werden.

So ist es z.B. notwendig, daß die zu entwickelnden fotografischen Materialien auf der Rückseite der Träger durch Beschreiben oder Bedrucken gekennzeichnet und dadurch bestimmten Auftraggebern und Kunden zugeordnet werden können. Eine aus Polyolefin bestehende, den Papierkern abgedichtende hydrophobe Beschichtung läßt sich aber nur bedingt beschriften oder kennzeichnen. Es sind spezielle Maßnahmen und Mittel erforderlich, damit eine generelle Bedruck- oder Beschreibbarkeit bei der maschinellen Verarbeitung des blattförmigen fotografischen Materials gewährleistet wird. Entsprechende Vorschläge sind beispielsweise beschrieben in der europäischen Offenlegungsschrift Nr. 0 160 912.

Es ist ferner erforderlich, daß das mit lichtempfindlichen Emulsionen beschichtete fotografische Material beim Entwicklungsprozeß aus den verschiedenen Behandlungsbädern, wie Entwicklungs- und Fixierbädern, keine Schmutzteilchen auf seiner Oberfläche anlagert ("tar-stain"), welche sich in gealterten fotografischen Behandlungsbädern durch Oxydations- und Kondensationsvorgänge im Laufe der Zeit bilden.

Neben einer solchen partiellen Schmutzteilchenaufnahme an der Oberfläche ("tar-stain") kann auch eine vollflächige Absorption von Entwicklerlösung auf der Oberfläche des Trägermaterials auftreten,die so intensiv ist, daß sie beim weiteren Durchlauf durch die Behandlungsbäder, insbesondere auch beim Wässern, nicht mehr vollständig reversibel ist. Dieser absorbierte Entwickler, bzw. die absorbierte Entwicklerkomponente oxydiert an der Luft und führt zu einer mehr oder weniger starken vollflächigen Gelbfärbung der Oberfläche.

Weiterhin ist es notwendig zu verhindern, daß die Entwicklerlösungen oder -bäder durch die Mittel verunreinigt werden, die Beschreibbarkeit, Bedruckbarkeit und dgl. wünschenswerte Eigenschaften bewirken. Das bedeutet, daß die Rückseitenschicht eine Abrieb- und Wasserfestigkeit aufweisen muß.

Eine andere Forderung für derartige fotografische Trägermaterialien ist eine Schicht mit guter Haftungsfähigkeit für Klebebänder. Diese Klebebänder dienen zur Befestigung der in Rollen vorliegenden fotografischen Papierstreifen aneinander. Die Verklebungen dürfen sich beim Entwicklungsprozeß während des Durchgangs durch die wässrigen Badflüssigkeiten nicht lösen.

Schließlich soll bei all dem möglichst noch eine elektrostatische Aufladung der Trägermaterialien verhindert werden, um beim Durchgang des kunststoffbeschichteten fotografischen Trägermaterials oder einer Kunststoffolie durch die Emulsionsgießmaschine bzw. durch die Entwicklungsmaschinen Verblitzungen zu vermeiden, die natürlich zur Unbrauchbarkeit der lichtempfindlichen Emulsion bzw. zur Zerstörung des zu entwickelnden latenten Bildes führen würden.

Zusammenfassend soll eine Rückseitenschicht den Trägermaterialien für lichtempfindliche Schichten, die entweder Kunststoffolien oder kunststoffbeschichtete Basispapiere sind, die Eigenschaften Beschreibbarkeit, Bedruckbarkeit, Klebebandhaftung, Abriebfestigkeit und Antistatik verleihen dabei aber keine fotografischen Behandlungsbäder verunreinigen und weder eine Schmutzaufnahme durch teerartige Oxydationsprodukte aus dem fotografischen Entwickler noch eine Verfärbung der Oberfläche durch oxydierte Entwicklerkomponenten bewirken.

Es ist bekannt, daß die hier beschriebenen Anforderungen an eine Rückseitenschicht unterschiedliche Maßnahmen erfordern, und es war bisher schwierig, sie insgesamt zu verwirklichen, weil die zur Lösung angebotenen Maßnahmen und Mittel einander oft widersprechen.

So ist z.B. aus der oben zitierten europäischen Offen-legungsschrift Nr. 0 160 912 bekannt, ein solches mit Polyethylen beschichtetes fotografisches Material auf seiner Rückseite mit einer antistatischen Schicht zu versehen, die aus einem Natrium-Magnesium-Silikat, einem Natriumpolystyrolsulfonat und bestimmten Bernsteinsäurehalbestern besteht. Diese Schicht soll die elektrostatische Aufladung verhindern und außerdem das Material gegen Schmutzaufnahme schützen. Es hat sich jedoch gezeigt (Vergleichsbeispiele A - C in DE 3 700 183), daß diese Schicht eine schlechte Klebebandhaftung oder eine geringe Bäderfestigkeit zeigt.

Allgemein zeigen hydrophobe Komponenten in Oberflächenbeschichtungen hohe Schmutzaufnahme und geringe antistatische Wirkung, während hydrophile Komponenten die Klebebandhaftung nachteilig beeinflussen, schlechte Bedruckbarkeit zeigen und sich in den Behandlungsbädern leicht ablösen oder aufquellen.

Andererseits zeigen polare (hydrophile) Oberflächen allgemein zwar gute Leitfähigkeit, also antistatische Eigenschaften, und eine geringe Neigung zur Schmutzaufnahme, aber mit zunehmender Polarität werden die Abriebfestigkeit und die Klebebandhaftung durch Einwirkung der fotografischen Bäder im Entwicklungsprozeß nachteilig beeinflußt.

In DE-OS 3 700 183 wird ein fotografisches Trägermaterial mit einer Rückseitenschicht beschrieben, die ein brauchbarer Kompromiß von verschiedenen guten Eigenschaften ist. Sie weist gute Antistatik, gute Bedruckbarkeit, mittlere bis gute Abrieb- und Bäderfestigkeit, geringe bis mittlere Schmutzaufnahme und gute Klebebandhaftung auf. Diese Rückseitenschicht wird gebildet aus
kolloidaler aluminiummodifizierter Kieselsäure,
Alkalisalz eine organischen Polysäure,
Acrylsäurealkylester-Copolymer mit einem Gehalt von
   1 - 10 Mol-% an freien Carboxylgruppen und
   0 - 20 Mol-% an freien Hydroxylgruppen und
   trifunktionellem Aziridin.

Das mit dieser Mischung beschichtete fotografische Trägermaterial weist jedoch keine Bleistiftbeschreibbarkeit auf. Außderdem hat sich gezeigt, daß die Schmutzaufnahme ("tar-stain") in verschiedenen oxidierten fotografischen Entwicklern noch zu hoch ist.

EP-OS 312 638 beschreibt ein fotografisches Trägermaterial für lichtempfindliche Schichten mit einer ähnlichen beschreib- und bedruckbaren Rückseitenschicht wie DE-OS 37 00 183. Die Schicht wird gebildet aus
kolloidaler aluminiummodifizierter Kieselsäure,
Alkalisalz einer organischen Polysäure,
Terpolymer aus Styrol/Butadien/Methylmethacrylat und grober Kieselsäure.

Sie liefert gute Ergebnisse in den antistatischen Eigenschaften, der Klebebandhaftung, der Bedruckbarkeit und der Strichfestigkeit (Bäderfestigkeit) und zeigt geringen "tar-stain" und geringe Verfärbung der Oberfläche durch oxydierte Entwicklerkomponenten. Hinzu kommt eine gute Bleistiftbeschreibbarkeit.

Beide Patentanmeldunger enthalten also kolloidale aluminiummodifizierte Kieselsäure und ein Alkalisalz einer organischen Polysäure. Sie unterscheiden sich voneinander durch unterschiedliche Latexbinder-Typen und durch die 4. Komponente, welche entweder ein Triazin oder grobkörnige Kieselsäure ist.

DE-OS 37 00 183 fordert als Binder ein Acrylsäurealkylester-Copolymer mit freien Carboxylgruppen und vorzugsweise mit freien Hydroxylgruppen. Das Aziridin dient der Vernetzung von freien Carboxylgruppen. Die freien Carboxyl- und Hydroxylgruppen erhöhen die Hydrophilie bzw. Polarität des Latex. In Kombination mit der hydrophilen kolloidalen Kieselsäure und der hydrophilen organischen Polysäure bildet sich eine Rückseitenschicht aus, die neben der hydrophoben Polymerkette des Latex einen hohen Anteil an hydrophilen Gruppen und Komponenten aufweist und dadurch ein bestimmtes Hydrophilie/Hydrophilie/Hydrophobie-Verhältnis besitzt, welches Ursache für die allgemein guten Ergebnisse ist. Das Aziridin ist jedoch carzinogen und beeinflußt als Vernetzungsmittel nachteilig die Topfzeit der Beschichtungsmassen.

EP-OS 312 638 fordert dagegen einen Styrol/Butadien/Methacrylat-Terpolymer-Latex als Binder, welcher in Verbindung mit den hydrophilen Komponenten Kieselsäure und organische Polysäure noch bessere Ergebnisse, insbesondere im "tar-stain" zeigt. Die Rückseitenschicht, die sich nach dieser Patentanmeldung ergibt, ist weniger hydrophil als die Rückseitenschicht gemäß DE-OS 37 00 183 und hat Vorteile bezüglich der Bleistiftbeschreibbarkeit.

Alle beschriebenen Lösungen erweisen sich jedoch in neuerer Zeit als unzureichend, weil infolge einer ständig intensiver werdenden Nutzung der Entwicklerkapazitäten die Topfzeiten (Wechselzyklus) der fotografischen Bäder länger werden und vermehrt teerartige und stark gefärbte Oxydationsprodukte in den fotografischen Entwicklungsbädern entstehen. Infolgedessen werden an die fotografischen Trägermaterialien immer höhere Ansprüche, insbesondere im Hinblick auf "tar-stain" und Oberflächenverfärbung gestellt.

Es ist daher Aufgabe der Erfindung, Beschichtungsmassen für Rückseitenschichten von Trägermaterialien für lichtempfindliche Schichten zur Verfügung zu stellen, die auch nach dem Durchlauf durch stark gealterte fotografische Behandlungsbäder deutlich geringere Verschmutzung durch teerartige Oxydationsprodukte aus den fotografischen Entwicklerbädern ("tar-stain") und deutlich geringere Verfärbung durch auf der Oberfläche absorbierte oxydierende Entwicklerkomponenten zeigen als es dem derzeitigen Stand der Technik entspricht. Dabei ist es eine Grundbedingung, daß die Schichten gegenüber dem Stand der Technik keine Verschlechterung der antistatischen Eigenschaften, der Beschreib- und Bedruckbarkeit, der Klebebandhaftung sowie der Abrieb- und Bäderfestigkeit aufweisen.

Gelöst wird diese Aufgabe durch eine Schicht aus einer Beschichtungsmasse zur Herstellung dieser Schicht, die mindestens gebildet wird aus
kolloidaler aluminiummodifizierter Kieselsäure,
Alkalisalz einer organischen Polysäure und
Styrol/Butadien-Copolymerlatex, der die folgenden Eigenschaften aufweist:
   Styrol : Butadien-Verhältnis = 70 : 30 bis 50 : 50,
   Carboxylgruppengehalt im Polymer = 0,5 - 3,0 Mol-%,
   Restmonomergehalt in der Dispersion < 200 ppm,
   Oberflächenspannung der Dispersion (30 Gew.-%ig) > 45 dyn/cm

Besonders bewährt haben sich Latexdispersionen die nichtionische oder anionische Emulgatoren enthalten wie sulfonierte Fettsäuren und deren Teilchengröße im Bereich von 500 - 3000 nm liegt.

In einer besonders bevorzugten Form enthalten sowohl die Beschichtungsmasse als auch die Rückseitenschicht zusätzlich Kieselsäure von 2 - 6 µm Teilchengröße.

Die Zusammensetzung der fertigen, auf den fotografischen Träger aufgetragenen und getrockneten Rückseitenschicht wird so gewählt, daß ihre Grenzflächenspannung > 50 dyn/cm ist.

Die besonders guten Untersuchungsergebnisse dieser Rückseitenschichten waren überraschend, da zunächst in DE-OS 3 700 183 durch die Wahl einer Kunststoffdispersion (Latex) mit freien Carboxyl- und vorzugsweise freien Hydroxylgruppen von insgesamt bis zu 25 Mol-% eine Verbesserung gegenüber dem Stand der Technik, d.h. gegenüber entsprechenden Kunststoffdispersionen ohne diesen hohen Gehalt an hydrophilen Gruppen, erreicht wurde; dann wurde in der EP-OS 312 638 eine Schicht mit einem Latex ohne freie Carboxyl- und Hydroxylgruppen beschrieben, der eine weitere Verbesserung des Standes der Technik erbrachte, insbesondere im "tar-stain" und in der vorliegenden Erfindung ergibt nun ein anderer Latex mit einem geringen Gehalt an Carbxylgruppen von 0,5 bis 3,0 Mol-% und bestimmten kolloidchemischen Eigenschaften eine weitere deutliche Verbesserung, insbesondere im Hinblick auf "tar-stain" bei stark gealterten Entwicklerlösungen.

Umfangreiche Untersuchungen haben dann gezeigt, daß neben der Zusammensetzung der Streichmasse und der Art des Latex-Copolymeren auch die oberflächenspannung des Latex sowie die Grenzflächenspannung des Rückseitenstrich von besonderer Bedeutung sind.

Insbesondere beeinflussen die Oberflächen- und Grenzflächenspannungen den "tar-stain", die Verfärbung (Vergilbung) durch adsorbierte, oxydierte Entwicklerkomponenten und die Abrieb- und Bäderfestigkeit der Schicht.

Als Latex hat sich eine Styrol/Butadien-Dispersion besonders bewährt.

Der Restmonomergehalt dieser Latices ist < 200 ppm.

Die Massenverhältnisse der Einzelkomponenten zueinander betragen erfindungsgemäß:

| | in der | |
|---|---|---|
| | Beschichtungsmasse | Schicht |
| Aluminiummodifizierte kolloidale Kieselsäure | 3 - 8 Gew.-% als 30 Gew.-%ige wässrige Dispersion | 10 - 40 Gew.-% |
| Alkalisalz einer organischen Polysäure | 0,5 - 2 Gew.-% als 30 Gew.-%ige wässrige Lösung | 3 - 10 Gew.-% |
| Styrol/Butadien-Copolymer | 7-9 Gew.-% als 50 Gew.-%ige wässrige Dispersion | 50 - 85 Gew.-% |
| Vorzugsweise: Kieselsäure von 2-6 µm Teilchengröße | 2 - 10 Gew.-% als 10 Gew.-%ige wässrige Dispersion | 3 -20 Gew.-% |
| Wasser | Rest zu 100 Gew.-% | im Gleichgewicht zur Umgebungsfeuchte |
| Anmerkung: Das Styrol/Butadien-Copolymer hat als verdünnte 30 Gew.-%ige wässrige Latex-Dispersion eine Oberflächenspannung von > 45 dyn/cm. Die getrocknete Schicht auf der Rückseite des fotografischen Trägermaterials hat eine Grenzflächenspannung von > 50 dyn/cm. | | |

Die aluminiummodifizierte Kieselsäure in der Beschichtungsmasse hat als kolloidale Lösung eine Teilchengröße von 7 - 16 nm, die Modifikation besteht vorzugsweise im Austausch von wenigen Siliciumatomen durch Aluminiumatome.

Das Akalisalz einer organischen Polysäure kann sein ein Lithium-, Natrium- oder Kaliumsalz der Polyacryl- oder Polymethacrylsäure, Maleinsäure, Itaconsäure, Crotonsäure, Polysulfonsäure oder von Mischpolymerisaten dieser Verbindungen, sowie von Cellulosederivaten. Bevorzugt sind die Alkalisalze von Polystyrolsulfonsäure oder von Naphthalinsulfonsäure oder ein Alkalicellulosesulfat.

Die Beschichtungsmasse und die Rückseitenschicht können noch geringe Mengen an optischen Aufhellern, Nuancierfarbstoffen, Antioxydantien, Gleitmittel u.ä. enthalten.

Als Auftragsaggregate für die Beschichtungsmassen eignen sich alle üblichen Systeme. Die Oberfläche des zu beschichtenden fotografischen Trägermaterials ist vorzugsweise durch Corona-Entladung vorzubehandeln, um eine bessere Haftung der aufgetragenen Schicht zu erzielen.

Die folgenden Beispiele sollen die Erfindung näher erläutern, jedoch nicht einschränken.

### Beispiel 1

Ein Trägermaterial, bestehend aus einem hochgeleimten Basispapier von 175 g/m² Flächengewicht und 30 g/m² Polyethylen mit 11 Gew.-% Titandioxyd auf der Vorderseite und 35 g/m² Polyethylen auf der Rückseite, wurde auf der Rückseite mit den folgenden Beschichtungsmassen beschichtet. (Tabelle 1).

Nach einer Oberflächenbehandlung des Trägermaterials mittels Corona-Entladung wurden die Beschichtungsmassen mit einem Walzenantragssystem auf die zu beschichtende Oberfläche aufgetragen, mit einer Glattrakel dosiert und im Heißluftkanal bei Lufttemperaturen von etwa 130°C getrocknet. Die Arbeitsgeschwindigkeit betrug 100 m/min. Das trockene Auftragsgewicht war 1,0 g/m² ± 0,1 g/m².

**Tabelle 1:**

| Beschichtungsmassen nach Beispiel 1 | | | | | | |
|---|---|---|---|---|---|---|
| Beispiel | 1a | 1b | 1c | 1c | 1e | 1f |
| Kolloidale, aluminium-modifizierte Kieselsäure 30 Gew.-%ig in Wasser (Ludox AM)* | 4,0 | 4,0 | 4,0 | 6,0 | 5,0 | 6,0 |
| Natriumpolystyrolsulfonat als 30 Gew.-% ig in Wasser | 1,0 | - | - | 0,8 | 1,6 | 1,0 |
| Natriumnaphthalintrisulfonat 30 Gew.-%ig in Wasser | - | 1,0 | - | - | - | - |
| Natriumcellulosesulfat 10 Gew.-%ig in Wasser | - | - | 3,0 | - | - | - |
| Styrol/Butadien-Copolymer 1* 50 Gew.-%ige Dispersion in Wasser | 7,5 | 7,5 | 7,5 | - | - | - |
| Styrol/Butadien-Copolymer 2* 48 Gew.-%ige Dispersion in Wasser | - | - | - | 8,5 | 8,5 | 8,5 |
| Kieselsäure (Teichengrößen 3 - 6 µm), 10 Gew.-% ig in Wasser | 4,5 | 6,5 | 8,5 | - | 6,5 | 6,5 |
| Netzmittel, 10 Gew.-%ig in Wasser/Methanol = 1 : 1 | 1,0 | 1,0 | 1,0 | 1,0 | 1,0 | 1,0 |
| Entsalztes Wasser | 82,0 | 80,0 | 76,0 | 83,7 | 77,4 | 77,0 |

| | | | | | | |
|---|---|---|---|---|---|---|
| * Ludox AM = Produkt der E.I. Du Pont de Nemours & Co. | | | | | | |
| * Copolymere (als Latexdispersion) | | | | | | |

| | Copoymer 1 | Copolymer 2 |
|---|---|---|
| Styrol-Butadien-Verhältnis | 60 : 40 | 55 : 45 |
| Carboxylgruppengehalt im Copolymer (Mol-%) | ca. 2 | ca. 1 |
| Mittlere Teilchengröße der Dispersion (nm) | 2.000 | 800 |
| Emulgatorsystem | anionisch sulfoniert | anionisch sulfoniert |
| Restmonomergehalt (ppm) | 100 - 200 | 100 - 200 |
| Oberflächenspannung einer 30 Gew.-%igen Verdünnung (dyn/cm) (DIN 53914) | 47 | 50 |

### Vergleichsbeispiele V 1

Das gleiche Trägermaterial wie aus Beispiel 1 wurde unter den gleichen Bedingungen wie Beispiel 1 mit den folgenden Beschichtungsmassen, Tabelle 2, beschichtet:

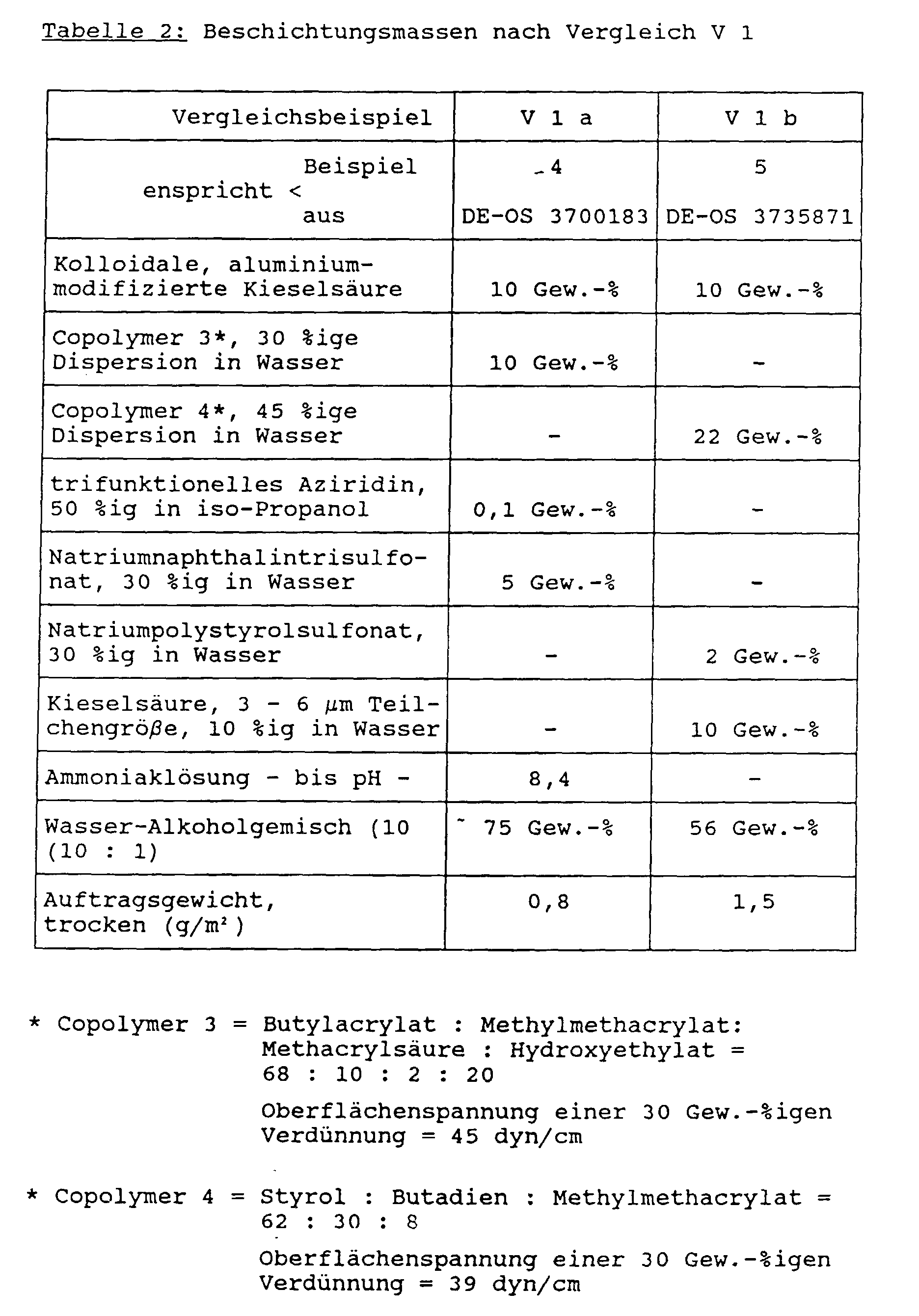

### Vergleichsbeispiel V 2

Das gleiche Trägermaterial wie aus Beispiel 1 wurde unter den gleichen Bedingungen wie im Beispiel 1 mit den folgenden Beschichtungsmassen (Tabelle 3) beschichtet:

**Tabelle 3:**

| Beschichtungsmassen nach Vergleich V 2 | | | |
|---|---|---|---|
| Vergleichsbeispiel | V 2a | V 2b | V 2c |
| Kolloidale, aluminiummodifizierte Kieselsäure wie in Beispiel 1 | 5,0 Gew.-% | 5,0 Gew.-% | 5,0 Gew.-% |
| Natriumpolystyrolsulfonat wie in Beispiel 1 | 1,6 Gew.-% | 1,6 Gew.-% | 1,6 Gew.-% |
| Styrol/Butadien-Copolymer 5*, 48 Gew.-%ige Dispersion in Wasser | 8,5 Gew.-% | - | - |
| Styrol/Butadien-Copolymer 6*, 48 Gew.-%ige Dispersion in Wasser | - | 8,5 Gew.-% | - |
| Styrol/Butadien-Copolymer 7*, 50 Gew.-%ige Dispersion in Wasser | - | - | 8,16 Gew.-% |
| Kielselsäure wie in Beispiel 1 | 6,5 Gew.-% | 6,5 Gew.-% | 6,5 Gew.-% |
| Netzmittellösung wie in Beispiel 1 | 1,0 Gew.-% | 1,0 Gew.-% | 1,0 Gew.-% |
| Entsalztes Wasser | 77,4 Gew.-% | 77,4 Gew.-% | 77,74 Gew.-% |

| | | | |
|---|---|---|---|
| *Styrol/Butadien-Copolymere (als Latex-Dispersion) | | | |

| | Copolymer 5 | Copolymer 6 | Copolymer 7 |
|---|---|---|---|
| Styrol-Butadien-Verhältnis | 60 : 40 | 50 : 50 | 70 : 30 |
| Carboxylgruppengehalt im Polymer | 0 | < 0,5 Mol-% | ca. 1 Mol-% |
| Mittlere Teilchengröße der Dispersion | 200 nm | 1000 nm | 1000 nm |
| Emulgatorsystem | anionisch | anionisch | anionisch |
| Oberflächenspannung einer 30 Gew.-%igen Verdünnung (DIN 53914) | 38 dyn/cm | 44 dyn/cm | 42 dyn/cm |

Die gefertigten Muster wurden den folgenden Prüfungen unterzogen:

Der Oberflächenwiderstand wurde vor und nach einem fotografischen Entwicklungsprozeß nach DIN 53 482 gemessen.

Für die Klebebandhaftunq wurde ein handelsübliches Klebeband, z.B. 3M-Klebeband 8422 benutzt. Das Klebeband wurde auf die Rückseitenschicht aufgedrückt und mit einem Gewicht von 3 kg belastet. Anschließend wurde das mit dem Klebeband beklebte Muster in 1,5 cm breite Streifen geschnitten, und das Klebeband in einem Bruchlasttester in einem Winkel von 180° mit einer Geschwindigkeit von 20 cm/min vom Muster abgezogen. Die zum Abziehen benötigte Kraft wurde gemessen.

Bei der "tar-stain"-Prüfung (Schmutzaufnahme) wurden verschiedene handelsübliche Colorentwickler aus Europa, Japan und USA ca. 2 cm hoch in eine offene Schale gefüllt und eine Woche an der Luft stehen gelassen. Nach dieser Zeit hat sich auf der Oberfläche eine dunkele, teerartige Schicht aus Oxidationsprodukten gebildet. über diese teerartige Oberflächenschicht wurde das leicht gewölbt gehaltene zu prüfende Muster gezogen, so daß ein enger Kontakt des Musters mit dem Teer gewährleistet war. Anschließend wurde das Muster unter fließendem Wasser gewaschen und an der Luft getrocknet. Der haftengebliebene Schmutz wurde als Maß für den "tar-stain" (Schmutzaufnahme) der zu prüfenden Schicht visuell beurteilt.

Die Verfärbung der Rückseitenschicht durch den fotografischen Entwicklungsprozeß wurde nach dem Durchlauf der Muster durch den Entwickler-Automaten und anschließender Lagerung der Muster für 4 Tage unter Luftzutritt bei Raumtemperatur visuell beurteilt.

Die Prüfung der Bedruckbarkeit (Druckbild nach Bädereinwirkung) und der Abrieb- bzw. Bäderfestigkeit wurde anhand von Mustern handelsüblicher Färbbänder durchgeführt. Zur Prüfung der Beständigkeit der Druckbilder gegen chemische und mechanische Beanspruchungen, wie sie während des Entwicklungsprozesses auftreten können, wurden die bedruckten Muster 30 Sekunden lang in einen handelsüblichen Entwickler getaucht. Danach wurden die Muster leicht mit dem Finger überstrichen und mit Wasser nachgespült. Zur Beurteilung der Bedruckbarkeit wurden Verwischungen oder Verfärbungen, die durch Auswaschen einer Farbkomponente auftreten können, untersucht. Die Abrieb- bzw. Bäderfestigkeit wurde anschließend durch intensives Reiben mit dem Finger ermittelt.

Zur Beschreibbarkeitsprüfunq mit Bleistiften wurde die Rückseitenschicht mit den Bleistifthärten 3B, HB und 2H beschrieben. Die Lesbarkeit der Beschriftung wurde vergleichend beurteilt.

Die Grenzflächenspannung wird bestimmt durch Aufstreichen von Testlösungen bekannter Oberflächenspannung auf die zu prüfende Schicht. Der Wert der Testlösung mit der höchsten oberflächenspannung, die mindestens 2 s lang die zu prüfende Schicht vollflächig benetzt, wird als Grenzflächenspannung in dyn/cm angegeben.

Die Ergebnisse aller Prüfungen sind in Tabelle 3 zusammengestellt worden:

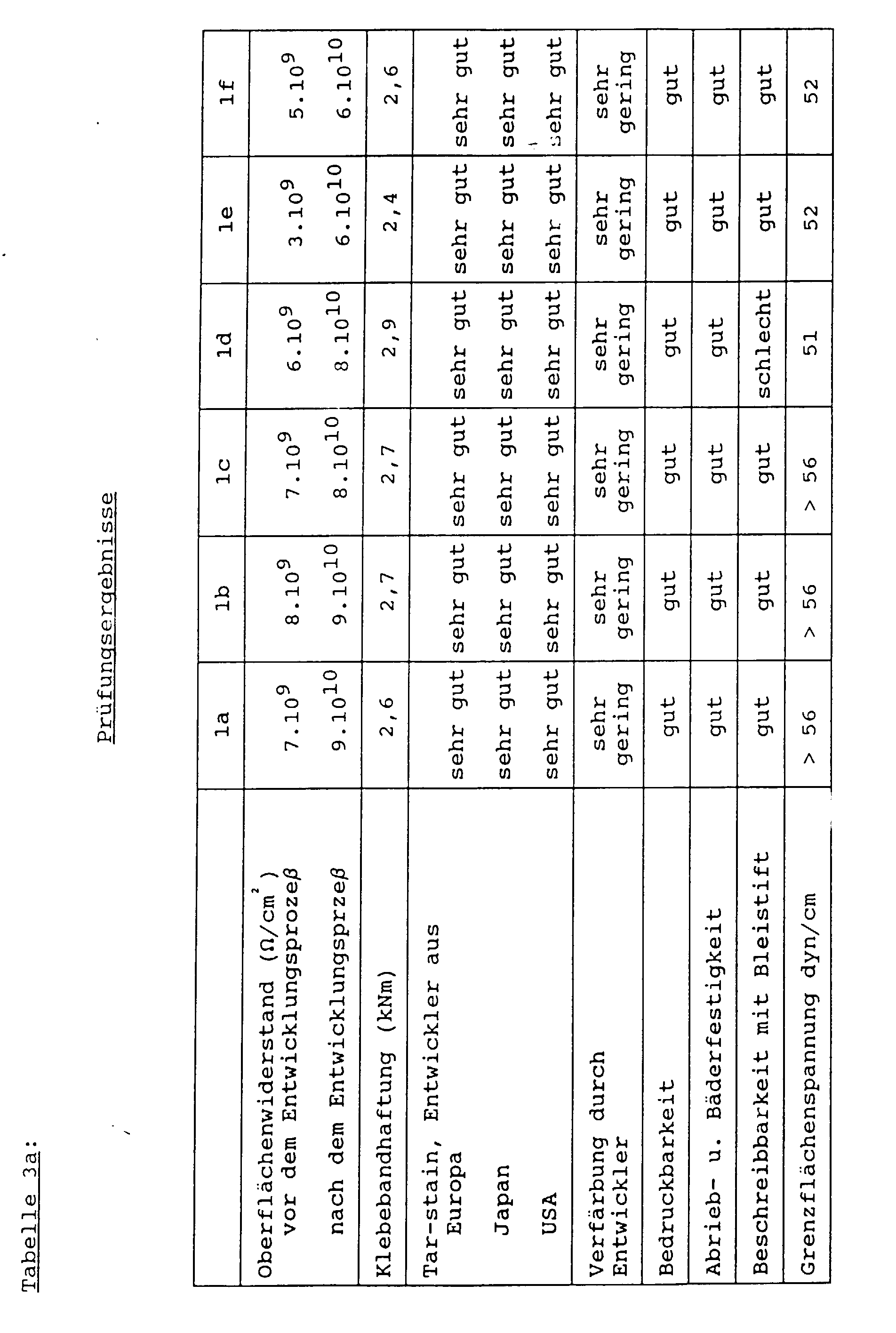

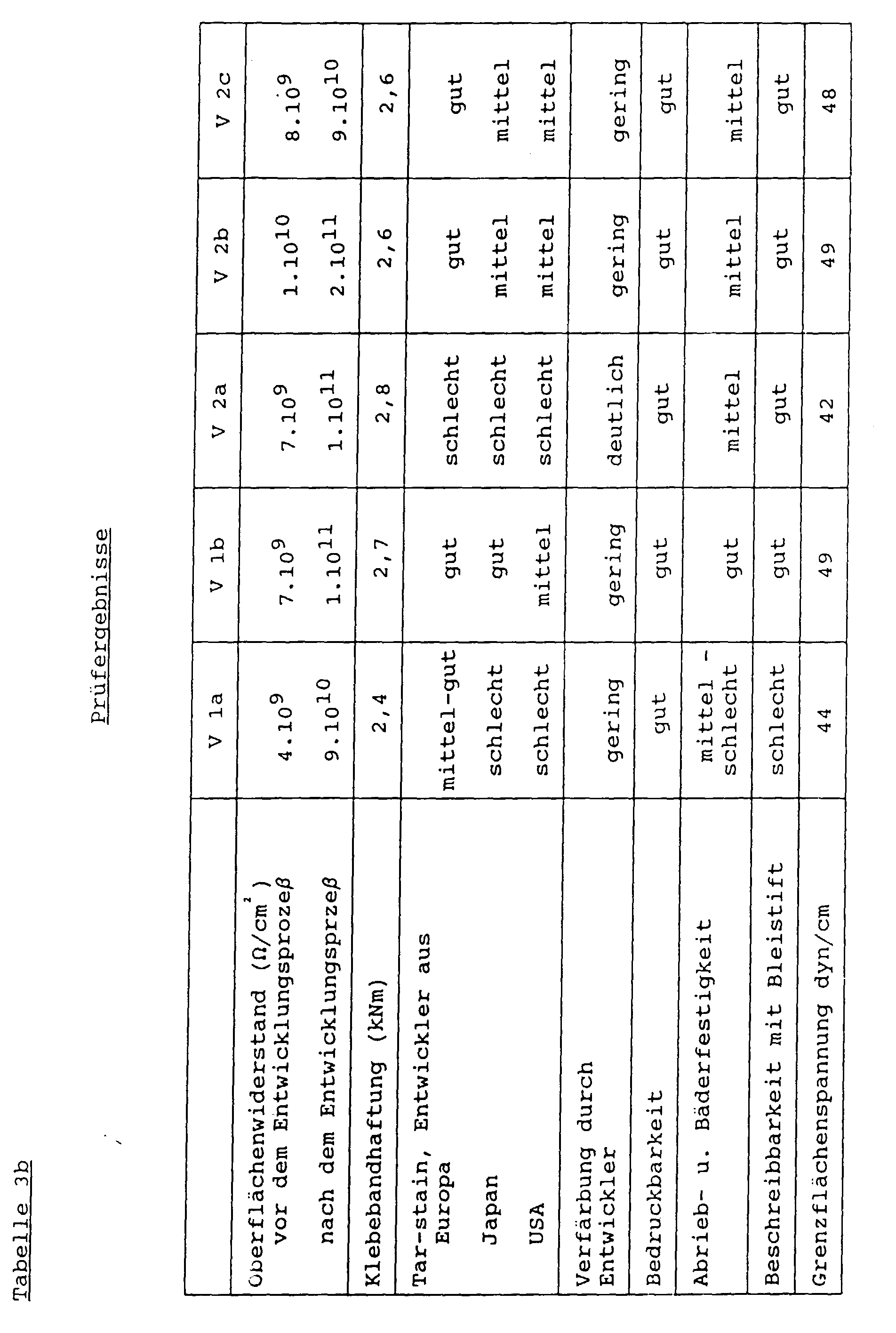

Die erfindungsgemäße Rückseitenschicht zeichnet sich insbesondere durch ein ausgeprägt inertes Verhalten gegenüber fotografischen Entwicklerlösungen sowie gegenüber deren Oxydationsprodukten aus. Das macht sich deutlich bemerkbar beim "tar-stain" und bei der "Verfärbung durch fotografischen Entwickler".

Das nachfolgende Diagramm 1 zeigt diese Abhängigkeiten auf und begründet die geforderte Oberflächenspannung für die Styrol/Butadien-Copolymerlatices und die geforderte Grenzflächenspannung der getrockneten Beschichtungsmassen.

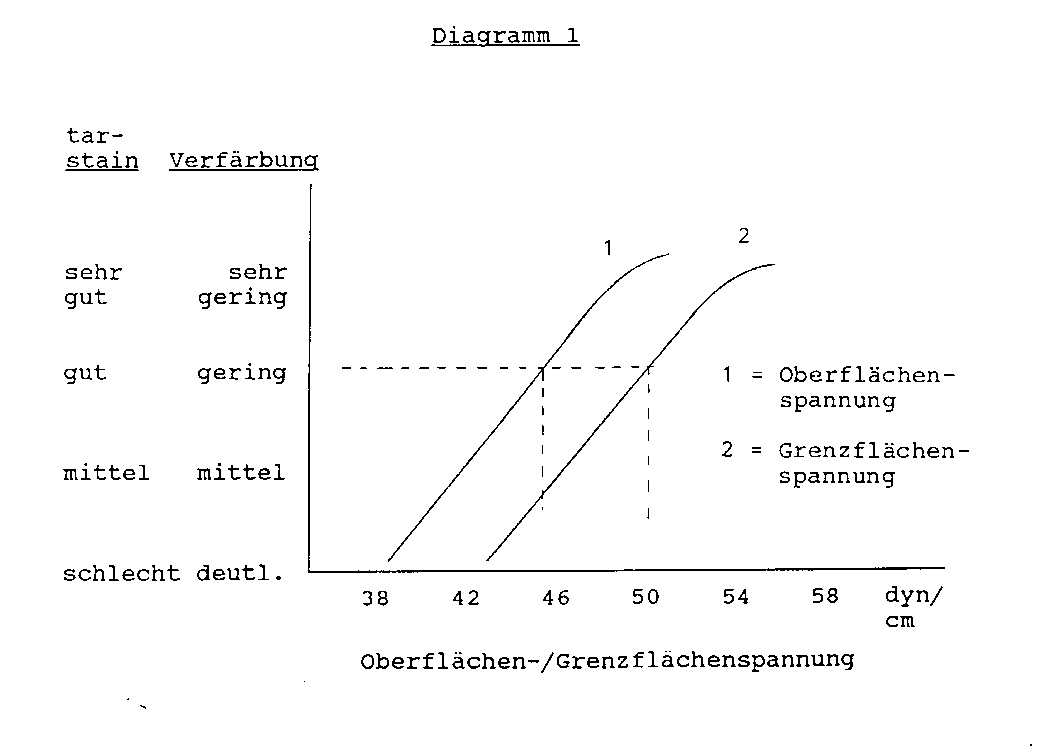

## Patentansprüche

1. Beschichtungsmasse zur Herstellung einer Schicht auf der Rückseite fotografischer Trägermaterialien, bestehend aus mindestens den Komponenten aluminiummodifizierte kolloidale Kieselsäure, Alkalisalz einer organischen Polysäure und Styrol/Butadien-Copolymerlatex, dadurch gekennzeichnet, daß der Styrol/Butadien-Copolymerlatex als wässrige Dispersion mit folgenden Kenngrößen vorliegt:
Styrol-Butadienverhältnis = 50:50 bis 70:30,
Carboxylgrupengehalt im Polymer = 0,5 - 3,0 Mol-%,
Restmonomergehalt < 200 ppm,
Oberflächenspannung einer 30 Gew.-%igen Verdünnung > 45 dyn/cm.

2. Beschichtungsmasse nach Anspruch 1, dadurch gekennzeichnet, daß die mittlere Teilchengröße der Styrol/Butadien-Copolymerdispersion zwischen 500 und 3000 nm liegt.

3. Beschichtungsmasse nach Anspruch 1 und 2, dadurch gekennzeichnet, daß das Emulgatorsystem der Styrol/Budadien-Copolymerdispersion nichtionisch oder anionisch ist.

4. Beschichtungsmasse nach Anspruch 1, dadurch gekennzeichnet, daß die Massenanteile der Komponenten, bezogen auf die Trockensubstanz der Beschichtungsmasse, die folgenden sind:
Kolloidale aluminiummodifizierte Kieselsäure: 0,9 bis 2,4 Gew.-%, Alkalisalz einer organischen Polysäure: 0,15 bis 0,6 Gew.-%, modifiziertes Styrol-Butadien-Copolymer: 7 bis 9 Gew.-%.

5. Beschichtungsmasse nach Anspruch 1 und 4, dadurch gekennzeichnet, daß sie zusätzlich 0,2 bis 1,0 Gew.-% Kieselsäure einer Teilchengröße von 2 bis 6 µm enthält.

6. Beschichtungsmasse nach Anspruch 1, 4 und 5, dadurch gekennzeichnet, daß zusätzlich bis zu 2 Gew.-% Feststoff an anderen Hilfsstoffen, wie optischen Aufhellern, Weißpigmenten, Farbstoffen, Dispergier- und Netzmitteln und Antioxidantien zugesetzt werden.

7. Rückseitenschicht fotografischer Träger, bestehend aus mindestens den Komponenten aluminiummodifizierte kolloidale Kieselsäure, Alkalisalz einer organischen Polysäure und Styrol/Butadien-Copolymerlatex, dadurch gekennzeichnet, daß der Styrol/Butadien-Copolymerlatex ein Styrol/Butadien-Verhältnis = 50:50 bis 70:30 aufweist, der Carboxylgruppengehalt im Polymer = 0,5 bis 3,0 Mol%, der Restmonomergehalt < 200 ppm ist und einer Grenzflächenspannung von >50 dyn/cm, wobei die Massenanteile ihrer Komponenten die folgenden sind:
| | |
|---|---|
| Aluminiummodifizierte Kieselsäure | 10 bis 40 Gew.% |
| Alkalisalz einer organischen Polysäure | 3 bis 10 Gew.% |
| Styrol/Butadien-Copolymer | 50 bis 85 Gew.% |

8. Schicht nach Anspruch 7, dadurch gekennzeichnet, daß sie zusätzlich 3 bis 20 Gew.-% Kieselsäure einer Teilchengröße von 2 bis 6 µm enthält.

9. Rückseitenschicht nach Anspruch 7 und 8, dadurch gekennzeichnet, daß zusätzlich bis zu 30 Gew.-% anderer Hilfsstoffe wie optische Aufheller, Weißpigmente, Farbstoffe, Dispergier- und Netzmittel und Antioxidantien zugesetzt sind.

## Claims

1. A coating mass for the production of a layer on the reverse side of photographic support materials, comprising at least the following components; an aluminum modified colloidal silica, an alkali salt of an organic polyacid, and a styrene/butadiene copolymer latex, characterized in that the styrene/butadiene copolymer latex is present as an aqueous dispersion with the following parameters:
styrene: butadiene ration = 50:50 to 70:30;
carboxyl group content in the polymer = 0.5 to 3.0 mol%;
residual monomer content < 200 ppm; and
surace tension of a 30 wt% dilution > 45 dyn/cm.

2. A coating mass according to claim 1, characterized in that the average particle size of the styrene/butadiene copolymer dispersion is between 500 and 3000 nm.

3. A coating mass according to claims 1 and 2, characterized in that the emulsifier system of the styrene/butadiene copolymer dispersion is non-ionic or anionic.

4. A coating mass according to claim 1, characterized in that the mass portions of the components, based on the dry weight of the coating mass, are as follows:
colloidal aluminum modified silica: 0,9 to 2,4 wt%;
alkali salt of an organic polyacid: 0,15 to 0,6 wt%;
modified styrene/butadiene copolymer: 7 to 9 wt%.

5. A coating mass according to claims 1 and 4, characterized in that it also contains 0.2 to 1,0 wt% silica of 2 to 6 µm particle size.

6. A coating mass according to claims 1, 4 and 5, characterized in that up to 2 wt% solids are additionally added of other auxiliary agents, such as optical brighteners, white pigments, coloring agents, dispersal and wetting agents and antioxidants.

7. Reverse side layer of photographic support materials, comprising at least the following components: an aluminum modified colloidal silica, an alkali salt of an organic polyacid and a styrene/butadiene copolymer latex, characterized in that the styrene/butadiene copolymer latex passesses a styrene/butadiene ration of between 50:50 and 70:30, the carboxyl group content in the polymer = 0,5 to 3,0 mol%, the residual monomer content is < 200 ppm and at the intenfacial surface tension is > 50 dyn/cm, whereby the mass portions of the components are as follows:
| | |
|---|---|
| aluminum modified silica | 10 to 40 wt% |
| alkali salt of an organic polyacid | 3 to 10 wt% |
| styrene/butadiene copolymer | 50 to 85 wt% |

8. A layer according to claim 7, characterized in that it also contains 3 to 20 wt% of silica of 2 to 6 µm particle size.

9. Reverse side layer according to claims 7 and 8, characterized in that up to 30 wt% are additionally added of other auxiliary agents, such as optical brighteners, white pigments, coloring agents, dispersal and wetting agents an antioxidants.

## Revendications

1. Masse d'enduction pour préparer une couche sur le verso de matériaux de support photographiques, constituée d'au moins les constituants acide silicique colloïdal modifié par l'aluminium, sel alcalin d'un polyacide organique et latex de copolymère styrène/butadiène, caractérisé en ce que le latex de copolymère styrène/butadiène se présente sous forme d'une dispersion aqueuse ayant les caractéristiques suivantes :
- rapport styrène/butadiène = 50 : 50 à 70 : 30,
- teneur en groupes carboxyle dans le polymère = 0,5 - 3,0 mole %,
- teneur en monomère résiduel < 200 ppm,
- tension superficielle d'une dilution à 30% en poids > 45 dyn/cm.

2. Masse d'enduction selon la revendication 1, caractérisée en ce que la taille moyenne des particules de la dispersion de copolymères styrène/butadiène est comprise entre 500 et 3000 nm.

3. Masse d'enduction selon les revendications 1 et 2, caractérisée en ce que le système émulsionnant de la dispersion de copolymères styrène/butadiène est non ionique ou anionique.

4. Masse d'enduction selon la revendication 1, caractérisée en ce que les fractions massiques des constituants rapportées à la substance sèche de la masse d'enduction sont les suivantes :
acide silicique colloïdal modifié par l'aluminiuim : 0,9 à 2,4% en poids, sel alcalin d'un polyacide organique : 0,15 à 0,6% en poids, copolymère modifié de styrène/butadiène : 7 à 9% en poids.

5. Masse d'enduction selon les revendications 1 et 4, caractérisée en ce qu'elle contient en outre de 0,2 à 1,0% en poids d'acide silicique ayant une taille des particules entre 2 et 6 µm.

6. Masse d'enduction selon les revendications 1, 4 et 5, caractérisée en ce qu'on y ajoute en outre jusqu'à 2% en poids de substances solides formées d'autres adjuvants tels que agents de blanchiment optique, pigments blancs, colorants, agents de dispersion et de réticulation et antioxydants.

7. Couche pour verso de support photographique, constituée d'au moins les constituants suivants : acide silicique colloïdal modifié par l'aluminium, sel alcalin d'un polyacide organique et latex de copolymère styrène/ butadiène, caractérisée en ce que le latex de copolymère styrène/butadiène a un rapport styrène/butadiène compris entre 50:50 et 70:30, la teneur en groupes carboxyle dans le polymère est comprise entre 0,5 et 3,0 % en moles, la teneur en monomère résiduel est < 200 ppm, et la tension de surface limite est > 50 dyn/cm, les fractions massiques de ces constituants étant les suivantes :
| | |
|---|---|
| acide silicique modifié par l'aluminium : | 10 à 40 % en poids |
| sel alcalin d'un polyacide organique : | 3 à 10 % en poids |
| copolymère styrène/butadiène : | 50 à 85 % en poids |

8. Couche selon la revendication 7, caractérisée en ce qu'elle contient en outre de 3 à 20% en poids d'acide silicique ayant une taille des particules entre 2 et 6 µm.

9. Couche pour verso selon les revendications 7 et 8, caractérisée en ce qu'on y ajoute en outre jusqu'à 30% en poids d'autres adjuvants tels que agents de blanchiment optique, pigments blancs, colorants, agents de dispersion et de réticulation et antioxydants.
